# EUROPEAN PATENT SPECIFICATION

(11) **EP 1 980 341 B1**
(45) Date of publication and mention of the grant of the patent: **03.03.2010**
(21) Application number: 07425216.4
(22) Date of filing: 13.04.2007
(51) Int. Cl.: B21F 23/00

(54) **Device and method for automatic loading of metal bars**
Vorrichtung und Verfahren zum automatischen Beladen von Metallstäben
Appareil et procédé pour charger automatiquement de barres métalliques

(43) Date of publication of application: 15.10.2008
(73) Proprietor: OSCAM S.p.A., 10127 Torino (IT)
(72) Inventor: Peruzzo, Stefano, 10127 Torino (IT)
(74) Representative: Gallarotti, Franco

(56) References cited:
- WO-A-2004/054736
- DE-B- 1 144 569
- DE-U1- 29 714 110
- JP-A- 9 192 768

## Description

The present invention relates to methods and devices for automatically loading a predetermined number of metal bars from a collection workstation, in which two or more bars are arranged in a bundle, to a reception workstation, from which the bars are, for example, to be supplied to a manufacturing machine, such as a machine for cutting and/or bending metal bars. Devices of this type are used in automated plants for the treatment of metal bars, in particular for the building industry.

The present applicant has illustrated in the Italian patent No. IT 1 206 893 a device of the type referred to above, which includes a roller with horizontal axis that receives on it bars taken from a bundle, oriented in a direction perpendicular to the axis of the roller. The roller has a helical groove, so that its rotation causes sequential feed of the bars, in the direction of the axis of the roller, towards the manufacturing machine. During rotation of the roller, each bar rests tangentially on a corresponding portion of the helical groove of the roller so as to be forced to translate in the direction of the axis of the roller as a result of the rotation of the roller. The roller hence functions as a device designed to feed the bars to the manufacturing machine, setting them at a distance from one another and consequently also enabling counting of the number of the bars fed.

A device for counting and feed of bars substantially identical to what has been described above is also illustrated in the document No. EP 1 356 875 A2. Provided in said known solution is a magnetic-effect lifting device, which can be displaced between a lowered position, for picking up the bars from the bundle in the collection workstation, and a raised position, in which a plurality of bars taken from the lifting device are located above a roller altogether similar to what is described above with reference to the document No. IT 1 206 893, which then sets them apart from one another, counting them and feeding them to a manufacturing machine. The problem of said known device lies in the fact that the magnetic-effect lifting device lifts and deposits on the roller an uncontrolled and undefined number of bars so that, after the roller has supplied the desired number of bars to the manufacturing machine, it is necessary to unload from the roller the possible bars in excess before proceeding to a new loading cycle, particularly in the case where this is to be carried out with bars of a diameter different from that of the ones previously loaded. The aforesaid known device is then subject to considerable down times, which are unfavourable to the productivity of the plant.

WO 2004/054736 A describes a device according to the preamble of claim 1.

The purpose of the present invention is to provide a device and a method for automatic loading of metal bars that will be able to overcome the drawbacks proper to the known art.

A further purpose of the invention is to provide a device and a method of automatic loading of metal bars that are extremely simple and functional.

Yet a further purpose of the invention is to provide a device and a method of automatic loading of metal bars that are suited to a high operating speed and that will consequently enable a high productivity.

The above and further purposes are achieved, according to the invention, via a method and a device according to Claims 1 and 14, respectively.

Further advantageous characteristics of the method of the device according to the invention are indicated in the dependent claims.

The invention will now be described with reference to the annexed plates of drawings, which are provided purely by way of non-limiting example and in which:

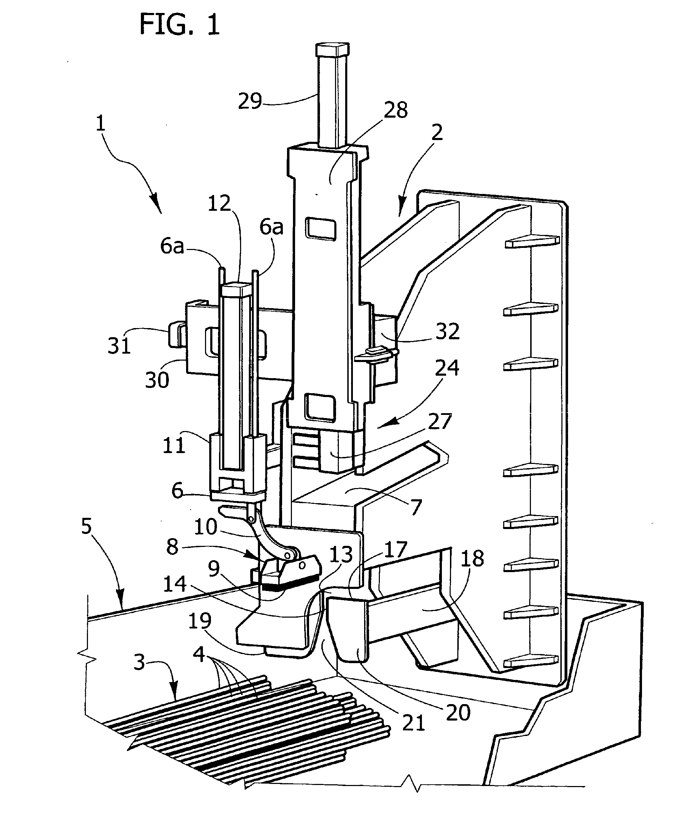

- Figure 1 is a schematic perspective view of an example of embodiment of a device according to the present invention;
- Figures 2-10 illustrates the device of Figure 1 in different operating conditions, where some details of Figure 1 have been further simplified, for greater clarity of illustration; and
- Figure 11 illustrates, in perspective view and at an enlarged scale, a particular of the device of Figure 1.

In the case of the example illustrated, the device according to the invention, designated as a whole by the reference number 1, is prearranged for being associated to the structure 2 of a head for cutting metal bars, particularly bars that are to be used for the reinforcement of concrete. According to the conventional technique, the cutting head is associated to one end of a cutting bench (not illustrated), on which the bars to be cut are positioned. Once again according to the conventional technique, the cutting head is provided with counter-rotating rollers (not visible in the drawings) for receiving the leading end or ends of one or more metal bars and for causing them to advance on the cutting bench for a length corresponding to the length of the pieces of bar that are to be obtained starting from the semifinished bars. The cutting head is provided with a cutting device (not visible in the drawings) that can move in a vertical direction and carries out cutting once the semifinished bars have been made to advance on the cutting bench for the desired length. None of the aforesaid constructional details are illustrated herein since they belong to the known art.

Of course, although the example illustrated herein refers to the feed of bars to a cutting bench, the device according to the invention is of general application and can be used in the case where there exists the need to feed a controlled number of bars automatically from a collection workstation to a reception workstation, for example to the inlet of a manufacturing machine, such as a cutting and/or bending apparatus of a type different from the one mentioned, for example with roller tracks and guillotines.

In the drawings, the reference number 3 designates a bundle of bars 4 (understood as a set of two or more bars arranged substantially adjacent in the direction of the length), pre-arranged in a collection workstation 5 adjacent to the device 1. In plants for machining metal bars, in the case where cutting benches are used, such as in the present non-limiting example, the semifinished bars are typically prearranged on supports or racks or in collection compartments, normally divided according to diameter. Normally, means for enabling a relative movement between the various bundles of bars of different diameter and the cutting bench are provided, to enable each time the bundle of bars of the desired diameter to be brought to the cutting bench. For example, carriage-type supporting devices are used, which carry the collection compartments of the bundles of bars, which can translate in a direction orthogonal to the direction of lie of the bars to bring the compartment carrying bars of the desired diameter up to the cutting bench.

The cutting head 2 has a mouth 7 designed to receive the leading end of the bars to be fed onto the cutting bench.

In order to provide automatic loading of the bars 4 into the mouth 7 of the cutting head, the device 1 comprises a magnetic-effect handling device, designated as a whole by the reference number 8. In what follows, the device 8 will also be defined as "lifting device", given that - in the embodiment described herein - it is used for raising the leading portion of the bars 4 from the collection workstation 5. It should be considered, however, that the idea underlying the invention is applicable also in the case of a magnetic-effect handling device pre-arranged for sliding the bars out of the corresponding bundle in a direction that is substantially horizontal or in any case transverse to the vertical.

The lifting device 8 comprises an electromagnet 9, carried at the bottom end of an arm 10, which is in turn carried by a slide 6, which can be displaced substantially in a vertical direction with respect to a supporting structure 11, fixed to the structure 2 of the cutting head and controlled by an actuator 12 of any type, for example a pneumatic actuator. In the example illustrated, the slide 6 is joined to two cylindrical guide columns 6a mounted slidably with respect to the fixed supporting structures 11. The electromagnet 9 can be mounted so that it can oscillate at the end of the arm 10.

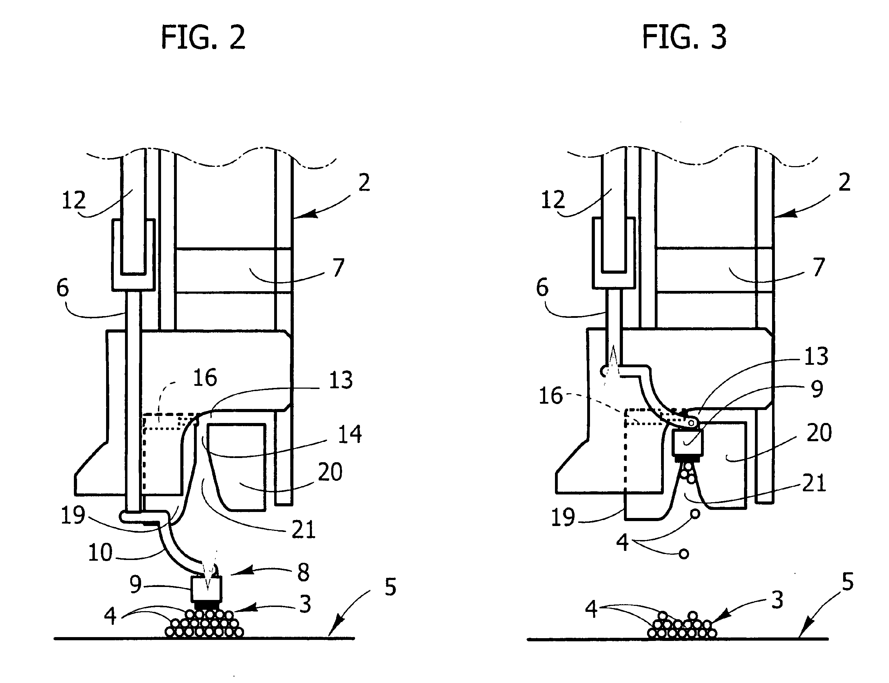

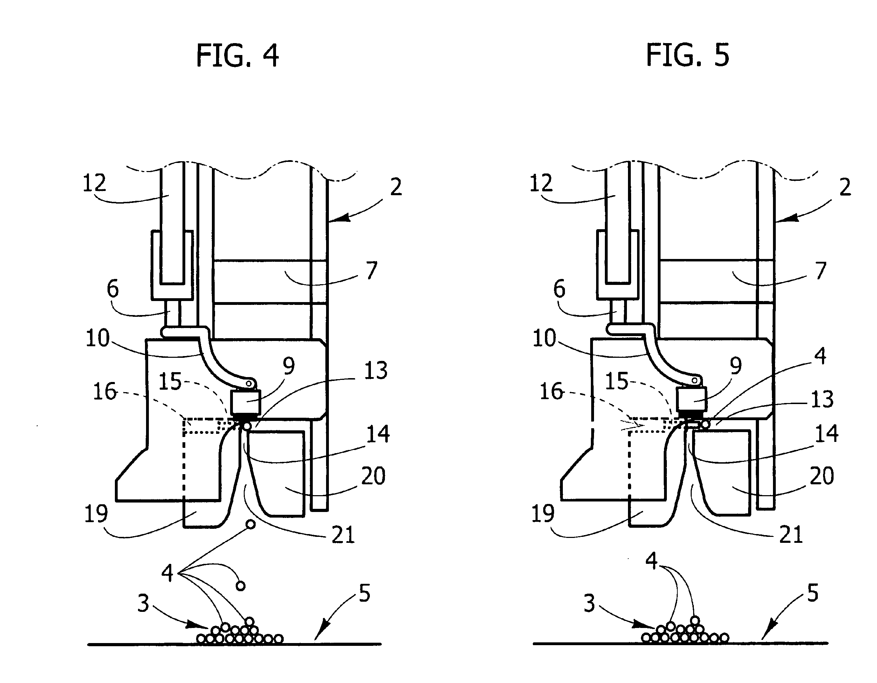

In the example illustrated, the electromagnet 9 can be displaced between a lowered position (Figure 2), in which it is able to take bars 4 from the collection workstation 5, and a raised position (Figure 4), in which the leading end of the bars 4 that have been lifted by the magnetic action of the electromagnet 9 is brought into a raised workstation 13 for reception of the bars.

According to an important characteristic of the present invention, the aforesaid leading portions of the bars 4, which are moved, in particular lifted, by the electromagnet 9, encounter along their path a restricted passage 14 of width adapted to the diameter of the bars 4, i.e., such as to enable passage of just one bar at a time. Consequently, whilst some of the bars 4 drop immediately, the bars 4 that remain attached to the electromagnet 9 are forced to arrange themselves aligned with respect to one another, one after another, to traverse the restricted passage 14, herein set vertically. On the other hand, the force of the electromagnet 9 is chosen so that, in the aforesaid condition, only the bar that adheres directly to the magnet remains attached to it until it reaches the workstation 13, whilst the remaining moved bars drop downwards again (Figure 4) on account of the insufficient magnetic field generated by the electromagnet and propagated to them. In this way, just one bar 4 manages to follow, with its leading portion, the electromagnet 9 up to the raised workstation 13. Consequently, in a preferred embodiment, the aforesaid electromagnet is pre-arranged and/or adjusted so as to adapt the magnetic force of attraction thereof, also according to the weight of the bars to be treated, in order to guarantee that the electromagnet will be able to bring into the position of reception 13 only the bar 4 that traverses the restricted passage 14, remaining in direct contact with the electromagnet.

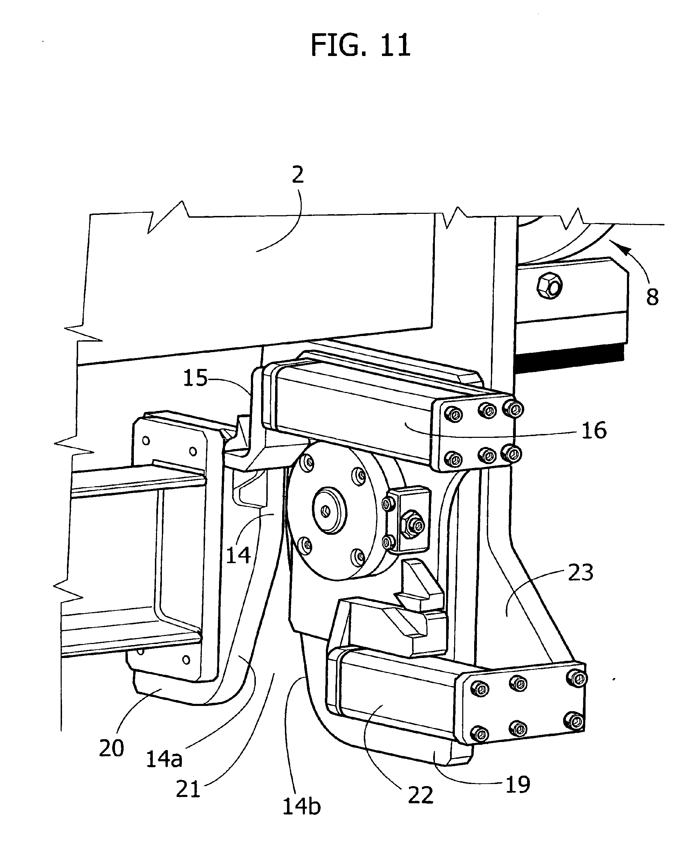

In a position adjacent to the restricted passage 14, the structure of the cutting head carries a pusher member 15 (Figure 11), which can be activated by means of an actuator 16, for example of a pneumatic type, for pushing the portion of bar that reaches the workstation 13 horizontally over a resting surface 17 defined by a support 18.

Figure 11 illustrates, at an enlarged scale, the detail of the device in which the restricted passage 14 is defined. As may be seen, said passage is defined between the facing edges 14a, 14b of two vertical plates 19, 20, which are substantially coplanar to one another. The edges 14a, 14b define a substantially V-shaped inlet mouth 21, radiused with the restricted passage 14. The plate 20 is connected rigidly to the fixed support 18, whilst the plate 19 can be displaced horizontally for adjusting the width of the restricted passage 14. For this purpose, the plate 19 is connected to the mobile part of a actuator 22, for example of a pneumatic type, supported by a bracket 23 fixed to the structure of the head 2. The plate 19 also carries the actuator 16 for governing the pusher member 15.

As may be seen clearly in Figure 5, each time a bar reaches the position corresponding to the reception workstation 13, the pusher member 15 is activated for separating the bar 4 from the electromagnet 9 and depositing it on the support 18 (and hence, in general terms, for pushing the bar 4 in a direction transverse to the direction of displacement followed by the bar itself within the restricted passage 14). Once there is a predetermined number of bars on the support 18, a transferring device 24 is activated. In the example illustrated, the transferring device 24 is a gripper-type transferring device, having a gripper member, which comprises a top jaw 25 and a bottom jaw 26 that can be displaced with respect to one another by means of an actuator 27 (for example, of a pneumatic type) between a closed position of gripping and an open position. The gripper member is carried at the bottom end of a slide 28, which can move in a vertical direction, via an actuator 29, for example of a pneumatic type, with respect to a carriage 30 that is in turn able to move horizontally, via an actuator 31, also for example of a pneumatic type, with respect to a fixed guide structure 32.

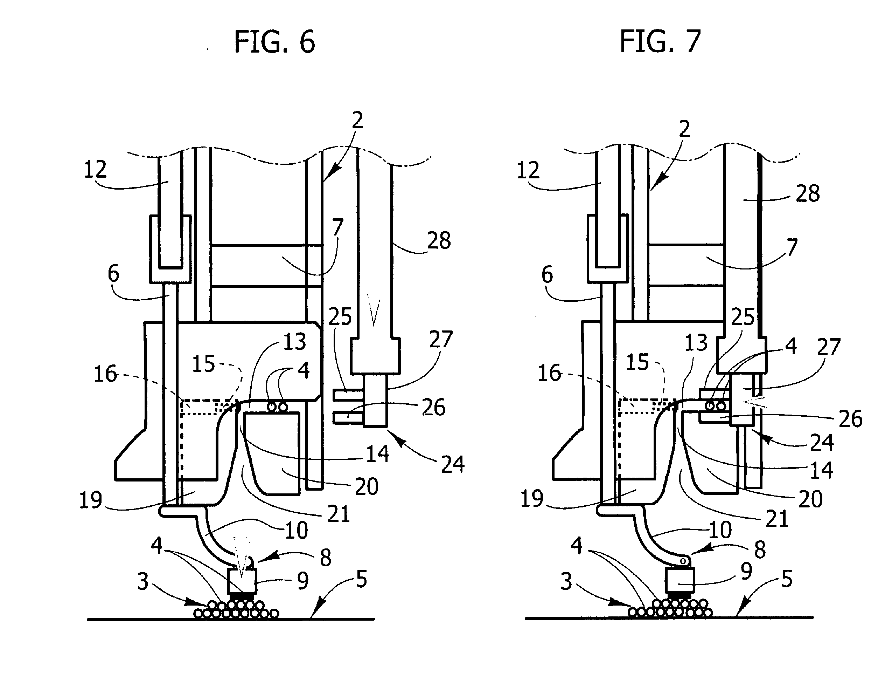

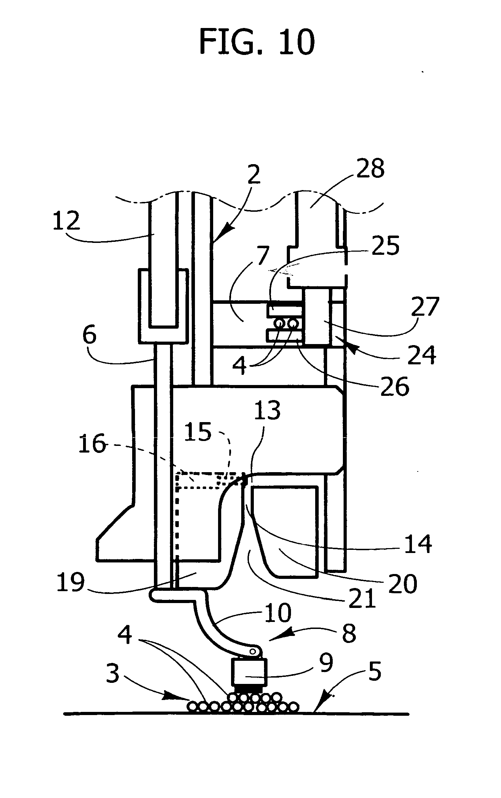

The actuator means necessary for operation of the device according to the invention (in the example illustrated, the actuator 12 for the vertical displacement of the electromagnet 9, the electromagnet 9 itself, the actuator 16 of the pusher member 15, the actuator 22 of the device for adjusting the width of the restricted passage 14, the actuators 29, 31 of the slides 28, 30 carrying the gripper device 24, the actuator 27 of the gripper device 24) are all controlled by an electronic control unit (not illustrated) according to a predetermined and programmable cycle. As may be seen in Figures 7-10, the gripper device 24 is displaced vertically and horizontally for gripping the bars 4 that are on the support 18 and for bringing them into a position corresponding to the mouth 7 of the cutting head so as to enable feed thereof onto the cutting bench.

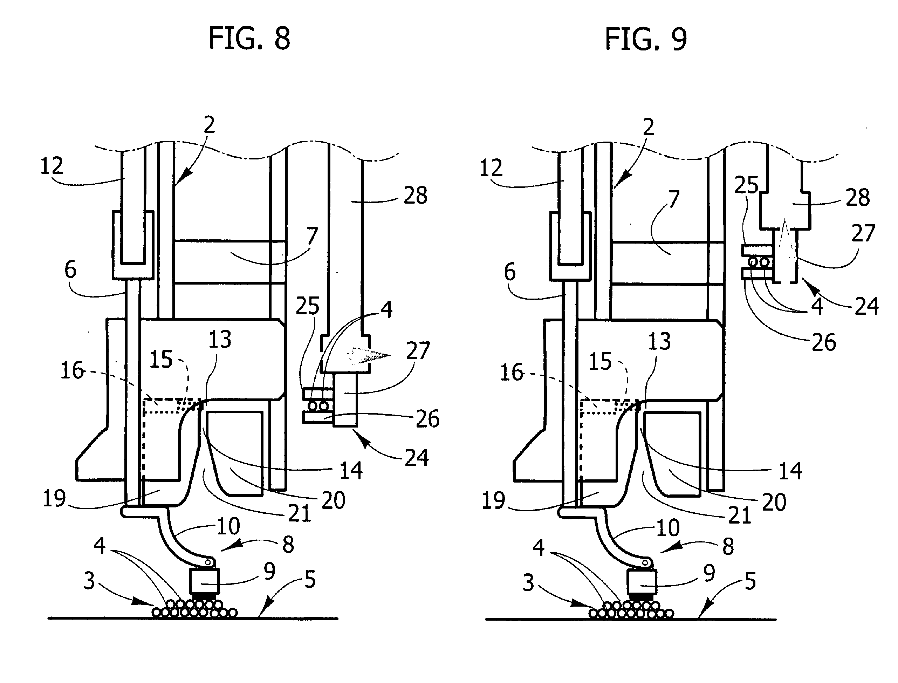

In operation of the device, whilst the gripper device 24 transfers the bars that have been previously carried on the bracket 18 up to the mouth 7 of the cutting head (Figures 8, 9), the electromagnet 9 can be controlled for being brought into the lowered position for picking up a number of bars 4 and then into its raised position for bringing just one bar 4 up to the reception workstation 13, where the pusher member 17 transfers it over the resting bracket 18. Said lifting cycle is repeated a number of times until there is the desired number of bars on the support 18, ready to be picked up by the gripper device 24 when the latter returns into the respective pick-up position (Figures 6, 7), with evident advantages in terms of reduction of down times.

As may be seen, in the device according to the invention, unlike in the known devices, the bars are carried into the raised position or position where they are picked up one at a time so that it is not necessary to proceed then to an operation of separation and counting and to an operation of unloading of the bars in excess, as occurs, instead, in the devices illustrated in the documents of the prior art mentioned above. This is obtained with extremely simple and reliable means, comprising in the first place the restricted passage 14. Advantageously, said passage is adjustable in its width to adapt the device to different bar diameters. The structure of the device is such as to enable a high operating speed and enables reduction to a minimum of down times, to the advantage of overall productivity of the plant.

In a possible variant embodiment, the device according to the invention is configured and arranged so that the functions of the support previously designated by 18 are provided directly by the mouth or region for loading the apparatus for machining the bars, whether this is a machine for cutting and/or of bending or a machine of some other type. In another variant, the support 18 instead faces, or is aligned to, the mouth or region for loading the apparatus for machining the bars, and the pusher means 15, 16 are configured for translating the bars directly from the reception position 13 to the aforesaid mouth. It will be appreciated that, in accordance with said variants, it is not necessary to use a transferring device of the type previously designated by 24.

In accordance with a further possible variant embodiment of the invention, the function of the support 18 is provided directly by a transferring device, for example of the type designated previously by 24, in which case the resting surface of the bars 4, previously designated by 17, is provided by the bottom jaw 26. Also said variant proves advantageous in so far as it prevents in any case having to proceed to an operation of separation and counting and to an operation of unloading of the bars in excess, as instead occurs in the prior-art solutions mentioned previously.

The magnetic-effect handling device can comprise a permanent magnet instead of an electromagnet.

## Claims

1. A device for automatically loading a predetermined number of metal bars (4) from a collection workstation (5), in which the bars (4) are arranged in a bundle (3), to a reception workstation (13),
said device comprising a magnetic-effect handling device (8), which can be displaced between a picking-up position, in particular a lowered position, for removal of the bars (4) from the bundle (3) in the collection workstation (5), and a reception position, in particular a raised position,
**wherein** said device comprises means for defining a restricted passage (14), which is to be traversed by the bars (4) that are moved, in particular lifted, by the aforesaid magnetic-effect device (8) and **which is of a width** adapted to the diameter of the bars such as to enable the magnetic-effect device (8) to bring only one bar (4) or portion of bar (4) at a time to the aforesaid position of reception (13), **said device being**
**characterised in that said restricted passage (14) is fixed with respect to said reception workstation (13),**
said device moreover comprising means for depositing on a support (18) the bar (4), or the portion of bar (4), which each time reaches the aforesaid position of reception (13), **wherein said reception workstation (13) is laterally disposed with respect to said support (18) and**
**wherein** said means for depositing the bar (4), or the portion of bar (4), that each time reaches said reception position (13) on said support (18) comprise pusher means (15, 16) for pushing the bar (4), or the portion of bar (4), which reaches said reception position (13), **towards said support (18)** so as to release it from the magnetic-effect device (8) said pusher means (15, 16) **being** configured for pushing the bar (4), or the portion of bar (4), in a horizontal direction or in any case a direction transverse to the direction of movement of the bar (4) or of the portion of bar (4) within said restricted passage (14).

2. The device according to Claim 1, **characterized in that** it comprises a transferring device (24) for gripping one or more bars (4) unloaded on said support (18) and bringing them into a final workstation (7).

3. The device according to Claim 1, **characterized in that** said means for defining the aforesaid restricted passage (14) are adjustable, so as to vary the width of the restricted passage (14) to adapt it to the diameter of the bars to be treated.

4. The device according to Claim 1 or Claim **3, characterized in that** said means for defining the aforesaid restricted passage (14) comprise a pair of plates (19, 20) substantially coplanar and orthogonal to the bars (4), having facing edges (14a, 14b) that define said restricted passage (14).

5. The device according to Claim **3, characterized in that** said facing edges (14a, 14b) define a substantially V-shaped inlet mouth (21), converging upwards and radiused with said restricted passage (14).

6. The device according to Claim **4** or Claim **5, characterized in that** one of said plates (19) can be displaced with respect to the other (20), particularly in a horizontal direction, for adjusting the width of the aforesaid restricted passage (14).

7. The device according to Claim **3** or Claim **6**,
**characterized in that** an actuator (22) is provided for governing said movement of adjustment of the width of the restricted passage (14).

8. The device according to Claim 1, **characterized in that** said magnetic-effect device (8) comprises a magnet (9) carried at the bottom end of an arm (10), which can be displaced with respect to a supporting structure (11) and controlled by an actuator (12).

9. The device according to Claim **2,**
**characterized in that** said transferring device is a gripper device (24), comprising a gripper member (25, 26, 27) carried at the bottom end of a slide (28), which can move in a vertical direction with respect to a slide (30), which in turn can move horizontally with respect to a fixed structure (32).

10. The device according to any one of the preceding claims, **characterized in that** said device comprises a supporting structure constituted by the head (2) of a bench for cutting and/or bending metal bars.

11. The device according to any one of the preceding claims, **characterized in that** it comprises an electronic control unit for governing actuator means (12, 16, 22, 27, 29, 31) that control movement of mobile parts of the device itself according to a predetermined and programmable cycle of operations.

12. The device according to Claim 1,
**characterized in that** said support (18) belongs to at least one from among:
- a transferring device pre-arranged for bringing one or more bars into a final workstation; and
- a region for loading an apparatus for machining the bars, to which the device itself is operatively associated.

13. The device according to Claim 1,
**characterized in that** said support (18) faces, or is aligned to, a region for loading the apparatus for machining the bars, to which the device itself is operatively associated, said means for depositing being moreover prearranged for translating the bars directly from said support to said loading region.

14. A method for automatically loading a predetermined number of metal bars (4) from a collection workstation (5), in which the bars (4) are arranged in a bundle (3), to a reception workstation (13),
said method comprising providing a magnetic-effect handling device (8), which can be displaced between a picking-up position, in particular a lowered position, for removal of the bars (4) from the bundle (3) in the collection workstation (5), and a reception position, in particular a raised position (13),
said method being **characterized in that** there is provided a restricted passage (14), **which is fixed with respect to said reception workstation (13),** that is to be traversed by the bars (4) that are moved, in particular lifted, **said restricted passage (13) being of a width** adapted to the diameter of the bars such as to enable the magnetic-effect device (8) to bring just one bar (4) or portion of bar (4) at a time into the aforesaid reception position (13), -and **in that** each time a bar (4) or portion of bar (4) reaches the aforesaid position of reception (13) it is pushed transversely with respect to the direction of movement of the bar (4) or of the portion of bar (4) within said restricted passage (14), so as to release it from the magnetic-effect device (8) and deposit it on **a** support (18) **which is laterally disposed with respect to said reception workstation (13).**

15. The method according to Claim **14, characterized in that,** once there is a predetermined number of bars (4) present on the support (18), a transferring device (24) is activated for gripping said bars and bringing them into a final position (7).

16. The method according to Claim **15, characterized in that** said final position is constituted by the inlet mouth (7) of the head (2) of a bench for cutting and/or bending metal bars.

17. The method according to Claim **14**, **characterized in that** the aforesaid restricted passage is adjusted to vary its width in order to adapt it to the diameter of the bars to be treated.

18. The method according to any one of the preceding claims, **characterized in that** the aforesaid magnetic-effect device is pre-arranged and/or adjusted so as to adapt the magnetic force of attraction thereof in order to guarantee that a corresponding magnet will be able to bring only the bar (4) that traverses said restricted passage into the reception position (13), remaining in direct contact with the magnet.

19. The method according to Claim **15, characterized in that,** while the aforesaid transferring device (24) brings the bars into said final position (7) and then returns into a respective picking-up position, further bars (4) are deposited in succession on said support (18).

## Patentansprüche

1. Vorrichtung zum automatischen Verladen einer vorbestimmten Zahl von Metallstäben von einer Sammelarbeitsstelle (5), bei der die Stäbe (4) in einem Bund (3) angeordnet sind, zu einer Abnahmearbeitsstelle (13),
wobei die Vorrichtung eine Magnetwirkungs-Handhabungsvorrichtung (8) enthält, die zwischen einer Aufnahmeposition, insbesondere einer abgesenkten Position, zum Entnehmen der Stäbe (4) aus dem Bund (3) an der Sammelarbeitsstelle (5) und einer Abnahmeposition, insbesondere einer angehobenen Position, verschoben werden kann,
wobei die Vorrichtung Einrichtungen enthält, die einen begrenzten Durchgang (14) definieren, der von den Stäben (4) durchlaufen werden muss, die von der zuvor erwähnten Magnetwirkungs-Handhabungsvorrichtung (8) bewegt, insbesondere angehoben werden, und der eine Breite hat, die auf den Durchmesser der Stäbe angepasst ist, so dass die Magnetwirkungs-Handhabungsvorrichtung (8) in der Lage ist, lediglich einen Stab (4) oder einen Abschnitt des Stabes (4) gleichzeitig zu der zuvor erwähnten Abnahmeposition (13) zu bringen, wobei die Vorrichtung **dadurch gekennzeichnet ist, dass** der begrenzte Durchgang (14) im Bezug auf die Abnahmearbeitsstelle (13) fixiert ist,
wobei die Vorrichtung darüber hinaus eine Einrichtung zum Ablegen des Stabes (4) oder des Abschnittes des Stabes (4) auf einem Träger (18) enthält, die jedes Mal die zuvor erwähnte Abnahmeposition (13) erreicht, wobei die Abnahmearbeitsstelle (13) seitlich im Bezug auf den Träger (18) angeordnet ist, und
die Einrichtung zum Ablegen des Stabes (4) oder des Abschnittes des Stabes (4), die jedes Mal die Abnahmeposition (13) auf dem Träger (18) erreicht, eine Schubeinrichtung (15, 16) enthält, die den Stab (4) oder den Abschnitt des Stabes (4), der die Abnahmeposition (13) erreicht, zu dem Träger (18) schiebt, um ihn so aus der Magnetwirkungs-Handhabungsvorrichtung (8) freizugeben,
wobei die Schubeinrichtung (15, 16) so eingerichtet ist, dass sie den Stab (4) oder den Abschnitt des Stabes (4) in einer horizontalen Richtung oder in jedem Fall in einer Richtung quer zur Bewegungsrichtung des Stabes (4) oder des Abschnitts des Stabes (4) innerhalb des begrenzten Durchgangs (14) schiebt.

2. Vorrichtung nach Anspruch 1, **dadurch gekennzeichnet, dass** sie eine Überführungsvorrichtung (24) enthält, die einen oder mehrere Stäbe (4) greift, die auf den Träger (18) abgeladen sind, und sie zur letzten Arbeitsstelle (7) bringt.

3. Vorrichtung nach Anspruch 1, **dadurch gekennzeichnet, dass** die Einrichtungen, die den zuvor erwähnten begrenzten Durchgang (14) definieren, einstellbar sind, um so die Breite des begrenzten Durchgangs (14) zu ändern und ihn auf den Durchmesser der zu bearbeitenden Stäbe anzupassen.

4. Vorrichtung nach Anspruch 1 oder Anspruch 3, **dadurch gekennzeichnet, dass** die Einrichtungen, die den zuvor erwähnten begrenzten Durchgang (14) definieren, zwei Platten (19, 20) enthalten, die im wesentlichen koplanar und orthogonal zu den Stangen (4) sind und einander zugewandte Kanten (14a, 14b) haben, die den begrenzten Durchgang (14) definieren.

5. Vorrichtung nach Anspruch 3, **dadurch gekennzeichnet, dass** die einander zugewandten Kanten (14a, 14b) eine im wesentlichen V-förmige Einlassmündung (21) bilden, die sich nach oben verjüngt und mit dem begrenzten Durchgang (14) abgerundet ist.

6. Vorrichtung nach Anspruch 4 oder 5, **dadurch gekennzeichnet, dass** eine der Platten (19) im Bezug auf die andere (20) insbesondere in einer horizontalen Richtung verschoben werden kann, um die Breite des zuvor erwähnten begrenzten Durchgangs (14) einzustellen.

7. Vorrichtung nach Anspruch 3 oder 6, **dadurch gekennzeichnet, dass** ein Stellantrieb (22) vorgesehen ist, der die Bewegung der Einstellung der Breite des begrenzten Durchgangs (14) steuert.

8. Vorrichtung nach Anspruch 1, **dadurch gekennzeichnet, dass** die Magnetwirkungsvorrichtung (8) einen Magneten (9) enthält, der am unteren Ende eines Armes (10) gehalten ist und im Bezug auf einen Halteaufbau (11) verschoben und mit einem Stellantrieb (12) gesteuert werden kann.

9. Vorrichtung nach Anspruch 2, **dadurch gekennzeichnet, dass** die Überführungsvorrichtung eine Greifvorrichtung (24) ist, die ein Greifelement (25, 26, 27) enthält, das am unteren Ende eines Stößels (28) geführt ist, der sich in einer vertikalen Richtung im Bezug auf einen Stößel (30) bewegen kann, der sich seinerseits horizontal im Bezug auf einen unbeweglichen Aufbau (32) bewegen kann.

10. Vorrichtung nach einem der vorhergehenden Ansprüche, **dadurch gekennzeichnet, dass** die Vorrichtung einen Halteaufbau enthält, der aus dem Kopf (2) einer Bank zum Schneiden und/oder Biegen von Metallstäben besteht.

11. Vorrichtung nach einem der vorhergehenden Ansprüche, **dadurch gekennzeichnet, dass** sie eine elektronische Steuereinheit zum Steuern von Betätigungseinrichtungen (12, 16, 22, 27, 29, 31) enthält, die die Bewegung beweglicher Teile der Vorrichtung an sich gemäß einem vorbestimmten und programmierbaren Betriebszyklus steuern.

12. Vorrichtung nach Anspruch 1, **dadurch gekennzeichnet, dass** der Träger (18) gehört zu:
- einer Überführungsvorrichtung, die dazu vorgerichtet ist, einen oder mehrere Stäbe zu einer letzten Arbeitsstelle zu bringen; und/oder
- einem Bereich zum Beladen eines Gerätes zur spanabhebenden Bearbeitung der Stäbe, dem die Vorrichtung an sich wirkungsmäßig zugeordnet ist.

13. Vorrichtung nach Anspruch 1, **dadurch gekennzeichnet, dass** der Träger (18) zu einem Bereich zum Beladen des Gerätes zur spanabhebenden Bearbeitung der Stäbe, dem die Vorrichtung wirkungsmäßig zugeordnet ist, ausgerichtet oder diesem zugewandt ist, wobei die Einrichtung zum Ablegen darüber hinaus dazu vorgerichtet ist, die Stäbe direkt von dem Träger zu dem Ladebereich zu verschieben.

14. Verfahren zum automatischen Verladen einer vorbestimmten Anzahl von Metallstäben (4) von einer Sammelarbeitsstelle (5), bei der die Stäbe (4) in einem Bund (3) angeordnet sind, zu einer Abnahmearbeitsstelle (13),
wobei das Verfahren das Bereitstellen einer Magnetwirkungs-Handhabungsvorrichtung (8) umfasst, die zwischen einer Aufnahmeposition, insbesondere einer abgesenkten Position, zum Entnehmen der Stäbe (4) aus dem Bund (3) an der Sammelarbeitsstelle (5) und einer Abnahmeposition, insbesondere einer angehobenen Position (13), verschoben werden kann,
wobei das Verfahren **dadurch gekennzeichnet ist, dass** ein begrenzter Durchgang (14) bereitgestellt wird, der im Bezug auf die Abnahmearbeitsstelle (13) fixiert ist und der von den Stäben (4) durchlaufen werden muss, die bewegt, insbesondere angehoben werden, wobei der begrenzte Durchgang (13) eine Breite hat, die auf den Durchmesser der Stäbe angepasst ist, so dass die Magnetwirkungs-Handhabungsvorrichtung (8) in der Lage ist, lediglich einen Stab (4) oder einen Abschnitt des Stabes (4) gleichzeitig zu der zuvor erwähnten Abnahmeposition (13) zu bringen, und **dadurch**, dass, jedes Mal, wenn ein Stab (4) oder ein Abschnitt des Stabes (4) die zuvor erwähnte Abnahmeposition (13) erreicht, dieser im Bezug zur Bewegungsrichtung des Stabes (4) oder des Abschnittes des Stabes (4) innerhalb des begrenzten Durchgangs quer verschoben wird, um ihn so aus der Magnetwirkungs-Handhabungsvorrichtung (8) zu lösen und ihn auf dem Träger (18) abzulegen, der im Bezug auf die Abnahmearbeitsstelle (13) seitlich verschoben ist.

15. Verfahren nach Anspruch 14, **dadurch gekennzeichnet, dass,** sobald eine vorbestimmte Anzahl von Stäben (4) auf dem Träger (18) vorhanden ist, eine Überführungsvorrichtung (24) aktiviert wird, um die Stäbe zu greifen und sie in die finale Position (7) zu bringen.

16. Verfahren nach Anspruch 15, **dadurch gekennzeichnet, dass** die finale Position durch die Einlassmündung (7) des Kopfes (2) einer Bank zum Schneiden und/oder Biegen von Metallstäben gebildet wird.

17. Verfahren nach Anspruch 14, **dadurch gekennzeichnet**, das der zuvor erwähnte begrenzte Durchgang eingestellt wird, um dessen Breite zu verändern und so ihn auf den Durchmesser der zu handhabenden Stäbe anzupassen.

18. Verfahren nach einem der vorhergehenden Ansprüche, **dadurch gekennzeichnet, dass** die zuvor erwähnte Magnetwirkungs-Handhabungsvorrichtung vorgerichtet und/oder eingestellt wird, um die magnetische Anziehungskraft derselben anzupassen und so sicherzustellen, dass ein entsprechender Magnet in der Lage sein wird, lediglich den Stab (4), der den begrenzten Durchgang durchläuft, in die Abnahmeposition (13) zu bringen, der in direktem Kontakt mit dem Magneten bleibt.

19. Verfahren nach Anspruch 15, **dadurch gekennzeichnet, dass,** während die zuvor erwähnte Überführungsvorrichtung (24) die Stäbe in die finale Position (7) bringt und anschließend in eine entsprechende Aufnahmeposition zurückkehrt, weitere Stäbe (4) aufeinander folgend auf dem Träger (18) abgelegt werden.

## Revendications

1. Dispositif pour charger automatiquement un nombre prédéterminé de barres métalliques (4) d'une station de collecte (5), dans laquelle les barres (4) sont agencées en ballot (3), jusqu'à une station de réception (13),
ledit dispositif comprenant un dispositif de manutention à effet magnétique (8), qui peut être déplacé entre une position de ramassage, dans une position particulière abaissée, pour retirer les barres (4) du ballot (3) dans la station de collecte (5), et une position de réception, dans une position particulière relevée,
dans lequel ledit dispositif comprend des moyens pour définir un passage limité (14) qui doit être traversé par les barres (4) qui sont déplacées, en particulier levées, par ledit dispositif à effet magnétique (8) mentionné précédemment, et qui a une largeur adaptée au diamètre des barres, afin de permettre au dispositif à effet magnétique (8) de ne prendre qu'une barre (4) ou une partie de barre (4) à la fois dans la position de réception (13) mentionnée précédemment, ledit dispositif étant **caractérisé en ce que** ledit passage limité (14) est fixe par rapport à ladite station de réception (13),
ledit dispositif comprenant de plus des moyens pour déposer sur un support (18), la barre (4) ou la partie de barre (4), qui atteint chaque fois la position de réception (13) mentionnée précédemment, dans lequel ladite station de réception (13) est disposée latéralement par rapport audit support (18), et
dans lequel lesdits moyens pour déposer la barre (4) ou la partie de barre (4), qui atteint chaque fois ladite position de réception (13) sur ledit support (18), comprennent des moyens de poussoir (15, 16) pour pousser la barre (4) ou la partie de barre (4), qui atteint ladite position de réception (13), vers ledit support (18) afin de la libérer du dispositif à effet magnétique (8),
lesdits moyens de poussoir (15, 16) étant configurés pour pousser la barre (4) ou la partie de barre (4), dans une direction horizontale ou dans tous les cas une direction transversale à la direction de déplacement de la barre (4) ou de la partie de barre (4) à l'intérieur dudit passage limité (14).

2. Dispositif selon la revendication 1, **caractérisé en ce qu'**il comprend un dispositif de transfert (24) pour saisir une ou plusieurs barres (4) déchargées sur ledit support (18) et les amener dans une station finale (7).

3. Dispositif selon la revendication 1, **caractérisé en ce que** lesdits moyens pour définir le passage limité (14) mentionné précédemment sont ajustables, pour modifier la largeur du passage limité (14) afin de l'adapter au diamètre des barres à traiter.

4. Dispositif selon la revendication 1 ou la revendication 3, **caractérisé en ce que** lesdits moyens pour définir le passage limité (14) mentionné précédemment comprennent une paire de plaques (19, 20) sensiblement coplanaires et orthogonales aux barres (4), ayant des bords en vis-à-vis (14a, 14b) qui définissent ledit passage limité (14).

5. Dispositif selon la revendication 3, **caractérisé en ce que** lesdits bords en vis-à-vis (14a, 14b) définissent une embouchure d'entrée (21) sensiblement en forme de V, convergeant vers le haut et arrondie avec ledit passage limité (14).

6. Dispositif selon la revendication 4 ou la revendication 5, **caractérisé en ce que** l'une desdites plaques (19) peut être déplacée par rapport à l'autre (20), en particulier dans une direction horizontale, pour ajuster la largeur du passage limité (14) mentionné précédemment.

7. Dispositif selon la revendication 3 ou la revendication 6, **caractérisé en ce qu'**un actionneur (22) est prévu pour gérer ledit mouvement d'ajustement de la largeur du passage limité (14).

8. Dispositif selon la revendication 1, **caractérisé en ce que** ledit dispositif à effet magnétique (8) comprend un aimant (9) supporté au niveau de l'extrémité inférieure d'un bras (10), qui peut être déplacé par rapport à une structure de support (11) et commandé par un actionneur (12).

9. Dispositif selon la revendication 2, **caractérisé en ce que** ledit dispositif de transfert est un dispositif de préhension (24), comprenant un élément de préhension (25, 26, 27) supporté au niveau de l'extrémité inférieure d'une glissière (28), qui peut se déplacer dans une direction verticale par rapport à une glissière (30), qui peut se déplacer à son tour horizontalement par rapport à une structure fixe (32).

10. Dispositif selon l'une quelconque des revendications précédentes, **caractérisé en ce que** ledit dispositif comprend une structure de support constituée par la tête (2) d'un établi pour couper et/ou plier les barres métalliques.

11. Dispositif selon l'une quelconque des revendications précédentes, **caractérisé en ce qu'**il comprend une unité de commande électronique pour gérer les moyens d'actionneur (12, 16, 22, 27, 29, 31) qui commandent le mouvement des parties mobiles du dispositif lui-même selon un cycle d'opérations prédéterminé et programmable.

12. Dispositif selon la revendication 1, **caractérisé en ce que** ledit support (18) appartient à au moins l'un parmi :
un dispositif de transfert préagencé pour amener une ou plusieurs barres dans une station finale; et
une région pour charger un appareil afin d'usiner les barres, à laquelle le dispositif lui-même est opérationnellement associé.

13. Dispositif selon la revendication 1, **caractérisé en ce que** ledit support (18) fait face ou est aligné à une région pour charger l'appareil afin d'usiner les barres, à laquelle le dispositif lui-même est opérationnellement associé, lesdits moyens de dépôt étant de plus préagencés pour faire passer les barres directement dudit support à ladite région de chargement.

14. Procédé pour charger automatiquement un nombre prédéterminé de barres métalliques (4) à partir d'une station de collecte (5), dans lequel les barres (4) sont agencées dans un ballot (3), jusqu'à une station de réception (13),
ledit procédé comprenant l'étape consistant à prévoir un dispositif de manutention à effet magnétique (8), qui peut être déplacé entre une position de prélèvement, en particulier une position abaissée, pour le retrait des barres (4) du ballot (3) dans la station de collecte (5), et une position de réception, en particulier une position relevée (13),
ledit procédé étant **caractérisé en ce que** l'on prévoit un passage limité (14) qui est fixe par rapport à ladite station de réception (13), qui doit être traversé par les barres (4) qui sont déplacées, en particulier levées, ledit passage limité (13) ayant une largeur adaptée au diamètre des barres, afin de permettre au dispositif à effet magnétique (8) d'amener juste une barre (4) ou une partie de barre (4) à la fois dans la position de réception (13) mentionnée précédemment, et **en ce que** chaque fois qu'une barre (4) ou une partie de barre (4) atteint la position de réception (13) mentionnée précédemment, elle est poussée transversalement par rapport à la direction de déplacement de la barre (4) ou de la partie de barre (4) à l'intérieur dudit passage limité (14) afin de la libérer du dispositif à effet magnétique (8) et la déposer sur le support (18) qui est disposé latéralement par rapport à ladite station de réception (13).

15. Procédé selon la revendication 14, **caractérisé en ce que,** une fois qu'il y a un nombre prédéterminé de barres (4) présentes sur le support (18), un dispositif de transfert (24) est activé pour saisir lesdites barres et les amener dans une position finale (7).

16. Procédé selon la revendication 15, **caractérisé en ce que** ladite position finale est constituée par l'embouchure d'entrée (7) de la tête (2) d'un établi pour couper et/ou plier les barres métalliques.

17. Procédé selon la revendication 14, **caractérisé en ce que** le passage limité mentionné précédemment est ajusté pour modifier sa largeur afin de s'adapter au diamètre des barres à traiter.

18. Procédé selon l'une quelconque des revendications précédentes, **caractérisé en ce que** le dispositif à effet magnétique mentionné précédemment est préagencé et/ou ajusté afin d'adapter la force magnétique de son attraction afin de garantir qu'un aimant correspondant peut amener uniquement la barre (4) qui traverse ledit passage limité dans la position de réception (13), restant en contact direct avec l'aimant.

19. Procédé selon la revendication 15, **caractérisé en ce que,** alors que le dispositif de transfert (24) mentionné précédemment amène les barres dans ladite position finale (7) et revient ensuite dans une position de prélèvement respective, des barres supplémentaires (4) sont déposées en succession sur ledit support (18).
